# NEUE EUROPÄISCHE PATENTSCHRIFT

(11) **EP 2 780 639 B2**
(45) Veröffentlichungstag und Bekanntmachung des Hinweises auf die Entscheidung über den Einspruch: **10.08.2022**
(45) Hinweis auf die Patenterteilung: 04.04.2018
(21) Anmeldenummer: 12703831.3
(22) Anmeldetag: 15.02.2012
(51) Int. Cl.: F24F 3/14

(54) **LUFTENTFEUCHTER**
AIR DEHUMIDIFIER
DÉSHUMIDIFICATEUR D'AIR

(30) Priorität: 15.11.2011 EP 11290524
(43) Veröffentlichungstag der Anmeldung: 24.09.2014
(73) Patentinhaber: Henkel AG & Co. KGaA, 40589 Düsseldorf (DE)
(72) Erfinder: ORLIK, Sylvain, F-33124 Brouqueyran (FR); RUTHE-STEINSIEK, Kai, 40219 Düsseldorf (DE); NOE, Mathieu, F-27700 La Roquette (FR); GODARD, Fanny, F-76000 Rouen (FR); FARCE, Jean-Michel, F-75006 Paris (FR)
(74) Vertreter: Hoffmann, Oliver
(86) Internationale Anmeldenummer: PCT/EP2012/052632
(87) Internationale Veröffentlichungsnummer: WO 2012/066150

(56) Entgegenhaltungen:
- WO-A1-2005/005024
- DE-U1- 9 000 887
- GB-A- 2 067 428
- US-A- 2 036 909

## Beschreibung

Die Erfindung betrifft einen Luftentfeuchter oder allgemein eine Vorrichtung zur Sorption von Feuchtigkeit aus Raumluft mittels eines hygroskopischen Luftentfeuchtungsmittels.

Dergleiche Vorrichtungen sind im Stand der Technik weit verbreitet. Mit Vorrichtungen der bekannten Art wird die Feuchtigkeit aus der Raumluft aufgenommen und in Form von Wasser oder einer wässrigen Lösung in einem Auffangbehälter gesammelt. Hierzu kommt ein hygroskopisches Luftentfeuchtungsmittel zum Einsatz, welches beispielsweise in Pulver- oder Granulatform vorliegt. Als Luftentfeuchtungsmittel haben sich hier insbesondere Calciumchlorid, Magnesiumchlorid, Silicagel oder auch Aluminiumoxidgel als einsetzbar herausgestellt. Beispiele für derartige Vorrichtungen werden insbesondere in der DE8816583U1, der EP793060A1 oder der US 5,125,561 offenbart.

Einfacher handhabbar, insbesondere bei dem Befüllen oder Nachfüllen besagter Vorrichtung mit einem Luftentfeuchtungsmittel hat sich jedoch der Einsatz eines Luftentfeuchtungsmittels in Tablettenform erwiesen. Eine derartige Tablette wird dabei insbesondere aus in Pulver- oder Granulatform vorliegenden hygroskopischen Mitteln, wie beispielsweise Calciumchlorid oder Magnesiumchlorid oder einer Mischung, durch ein Pressverfahren hergestellt. Ein Beispiel für eine derartige Vorrichtung zeigt die EP1779043B1. Die Oberfläche der Tablette steht dabei für die Sorption der Feuchtigkeit zur Verfügung. Oft werden die Tabletten auf eine Unterlage aufgelegt oder es ist - wie in der genannten EP177904B1 offenbart - ein entsprechendes Haltegestell vorgesehen, welches Bereiche der Tablette abdeckt und so die Sorption beeinträchtigt.

Aufgabe der vorliegenden Erfindung ist daher die Bereitstellung einer verbesserten Vorrichtung der eingangs genannten Art.

Diese Aufgabe wird durch die Merkmale des Anspruchs 1 gelöst.

Vorteilhafte Weiterbildungen der Erfindung sind mit den Unteransprüchen angegeben.

Grundgedanke der Erfindung ist die Bereitstellung einer Vorrichtung zur Sorption von Feuchtigkeit aus Raumluft mittels einer Tablette, beinhaltend ein hygroskopisches Luftentfeuchtungsmittel aufweisend einen Tablettenkörper mit einer äußeren Oberfläche - der Sorptionsoberfläche - wobei die Vorrichtung eine Haltevorrichtung für die Tablette aufweist, sowie einen unterhalb der Haltevorrichtung angeordneten Auffangbehälter zur Aufnahme einer Lösung, wobei die Haltevorrichtung ein Hängemittel zum Aufhängen der Tablette oberhalb des Auffangbehälters umfasst, wobei das Hängemittel einen Kontakt nahezu der gesamten Sorptionsoberfläche mit der Raumluft ermöglicht, um die freie und zur Sorption von Feuchtigkeit zur Verfügung stehende Sorptionsoberfläche der Tablette zu vergrößern.

Ein derartiges Hängemittel kann auf unterschiedliche Art und Weise ausgestaltet sein. Denkbar ist hier die Gestaltung eines vorstehenden Domes, welcher in eine Aussparung der Tablette eingreift, so dass die Tablette an diesem Dorn aufhängbar ist. Auch kann ein Dorn oder ähnlich gestaltetes Hängemittel zum Einsatz kommen, welches sich durch eine Durchgangsöffnung oder Durchgangsloch oder durchgehende Bohrung einer Tablette erstreckt. Ferner kann das Hängemittel durch zwei gegenüberliegende und vorzugsweise im Wesentlichen spitz zulaufende Klemmmittel gestaltet sein, zwischen denen eine Tablette, insbesondere eine zylindrisch gestaltete Tablette an zwei gegenüberliegenden Seiten unter Vorspannung, beispielsweise mittels einer Feder einspannt werden kann. Durch eine bewegliche Anordnung mindestens eines der Klemmmittel und durch geeignete Wahl der Vorspannung kann die Tablette auch bei der Verkleinerung selbiger bei dem Übergang in Lösung durch Bewegung zumindest eines Klemmmittels wirksam gehalten werden.

Alle Lösungen haben jedoch gemein, dass nahezu die gesamte Sorptionsoberfläche als freie Sorptionsoberfläche zur Verfügung steht, also als Oberfläche des Tablettenkörpers, die für die Sorption der Feuchtigkeit aus der Raumluft zur Verfügung steht. Eine Abdeckung eines Großteils der Oberfläche des Tablettenkörpers kann durch den Einsatz eines derartigen Hängemittels vermieden werden, so dass eine Vergrößerung der freien und zur Sorption von Feuchtigkeit zur Verfügung stehenden Sorptionsoberfläche der Tablette vergrößert wird. Diese vergrößerte freie Sorptionsoberfläche resultiert in einer höheren Sorptionsrate der erfindungsgemäßen Vorrichtung im Vergleich zu herkömmlichen Vorrichtungen der eingangs gezeigten Art.

Vorzugsweise ist der Auffangbehälter im Wesentlichen als geschlossene Sammelschale gestaltet, um ein Auslaufen der von der sich durch die aufgenommene Feuchtigkeit auflösende Tablette entstehenden Lösung zu verhindern und weist an seiner Oberseite eine angeformte oder als separates Teil gestaltete Deckfläche auf. Dabei ist die Verbindung zwischen Sammelschale und Deckfläche vorzugsweise dicht gestaltet. Zudem weist die Deckfläche vorzugsweise eine Auslaufsperre auf, die es ermöglicht, dass eine Lösung, die von der Deckfläche gesammelt wurde, in die Sammelschale ablaufen kann, und die das Auslaufen der gesammelten Lösung aus einer umgekippten Vorrichtung verhindert. Die Gestaltung insbesondere der Auslaufsperre kann dabei gemäß der Offenbarung der EP1779043B1 erfolgen, die insoweit die vorliegende Offenbarung ergänzt.

Die zum Einsatz kommende Tablette besteht dabei insbesondere aus hygroskopischen Mitteln in Pulver- oder Granulatform, wie beispielsweise Calciumchlorid oder Magnesiumchlorid oder einer Mischung, durch ein Pressverfahren in besagte Tablettenform gebracht werden. Insbesondere sind die Merkmale einer Tablette sowie ein Herstellungsverfahren einer Tablette denkbar wie in der EP1426105A1 beschrieben, welche insoweit die vorliegende Offenbarung ergänzt. Die Grundform der Tablette ist vorzugsweise zylindrisch. Denkbar sind jedoch auch eckige Grundform, insbesondere Tabletten mit dreieckigem, viereckigem oder vieleckigem Querschnitt.

Besonders vorteilhaft hat sich ferner eine Gestaltung des Hängemittels der Haltevorrichtung derart erwiesen, dass es dornförmig gestaltet ist, so dass eine Eingriffsmöglichkeit in eine Aussparung einer Tablette zum Aufhängen der Tablette ermöglicht wird. Auch kann das dornförmige Hängemittel derart und insbesondere spitz gestaltet sein, dass es selbst erst bei der Befüllung der Vorrichtung mit einer Tablette eine Aussparung in selbige Tablette einbringt. Insbesondere bei dem Einsatz einer im Wesentlichen zylindrischen Tablette kann selbige jedoch zumindest eine Aussparung, beispielsweise in Form eines einfachen Sackloches, vorzugsweise eines Durchgangsloches oder einer Durchgangsöffnung aufweisen, in die das dornförmige Hängemittel derart eingreift, dass die Tablette hinsichtlich des Auffangbehälters und des Substrates auf dem der Auffangbehälter angeordnet ist, an diesem dornförmigen Hängemittel hängt. So kann im Wesentlichen die gesamte äußere Oberfläche der Tablette - abgesehen von dem Bereich der Aussparung, die mit dem dornförmigen Hängemittel in Kontakt steht - der Tablette als freie Sorptionsoberfläche zur Sorption der Feuchtigkeit aus der Raumluft genutzt werden.

Die genaue Ausgestaltung des dornförmigen Hängemittels kann dabei von der Gestaltung der Tablette und den übrigen Bauelementen der Vorrichtung sowie der Lage und Anordnung des Hängemittels abhängen. Beispielsweise kann das Hängemittel dornförmig, also vorstehend und im Wesentlichen zylindrisch oder hohlzylindrisch gestaltet sein und sich im Wesentlichen parallel zum Boden des Auffangbehälters und/oder des Substrates erstrecken. Auch ist ein schräger Verlauf denkbar, insbesondere um eine sichere Fixierung der Tablette zu gewährleisten. Weiter kann das Hängemittel hakenförmig ausgebildet sein oder eine andere Form aufweisen, welche ein Aufhängen der Tablette gewährleistet.

In einer vorteilhaften Weiterentwicklung kann der Dorn zumindest eine Öffnung aufweist, um eine Belüftung der Tablette im Bereich der Aussparung zu ermöglich und um die freie und zur Sorption von Feuchtigkeit zur Verfügung stehende Sorptionsoberfläche der Tablette weiter zu vergrößern. Auch kann die zumindest eine Öffnung derart gestaltet sein, dass sie der durch die Sorption entstehenden Lösung eine bevorzugte Abtropf- und/oder Fließrichtung ermöglicht.

Weiterhin hat es sich als vorteilhaft herausgestellt, wenn das dornförmige Hängemittel vorstehende Abstandselemente, insbesondere längliche Rippen, die sich in Erstreckungsrichtung des Hängemittels erstrecken können, zur Bereitstellung einer Auflagemöglichkeit für die Tablette im Bereich ihrer Aussparung aufweist, um die Kontaktfläche von Tablette und Hängemittel zu minimieren. In diesem Fall hängt die Tablette demnach lediglich durch eine Auflage von kleinen Oberflächenbereichen innerhalb der Aussparung auf genannten Abstandselementen an dem Hängemittel, so dass die freie Sorptionsoberfläche weiter vergrößert werden kann. Denkbar ist insbesondere auch der Einsatz von Noppen, Vorsprüngen oder Stiften als Abstandselemente.

Ein weiterer Vorteil ist der Einsatz einer Abdeckung oberhalb des Auffangbehälters, welche einen Innenraum umschließt in dem die Haltevorrichtung oder das Hängemittel vorgesehen ist, wobei die Abdeckung mit zumindest einer Belüftungsöffnung ausgestattet ist, um eine Belüftung der Tablette mit Raumluft zur Sorption der Feuchtigkeit aus der Raumluft zu ermöglichen. Die Abdeckung kann ferner dem Schutz der Tablette dienen und ist daher vorzugsweise im Wesentlichen geschlossen und deckt die Tablette rundum ab. So kann ausgeschlossen werden, dass die Tablette verschmutzt. Die Belüftungsöffnung, vorzugsweise eine Vielzahl an Belüftungsöffnungen sind vorzugsweise zumindest auf dem Niveau der innerhalb des Innenraums angeordneten Tablette, so dass eine gute Belüftung ermöglicht werden kann. Die Belüftungsöffnung kann dabei beliebig gestaltet sein, beispielsweise als Loch, Spalte oder Schlitze. In einer bevorzugten Ausführungsöffnung kommt eine Vielzahl an Belüftungsöffnungen in Form einer Vielzahl von Schlitzen zum Einsatz, welche sich über eine Seite der Abdeckung propellerartig erstrecken. Vorzugsweise liegt die Gesamtöffnungsfläche aller Belüftungsöffnungen im Bereich von 40cm² bis 80cm², besonders bevorzugt im Bereich von 45cm² bis 65cm².

Besonders vorteilhaft ist zudem eine Gestaltung der Abdeckung derart, dass zumindest jeweils eine Belüftungsöffnung an einer ersten Seite und an einer der ersten Seite gegenüberliegenden zweiten Seite der Abdeckung vorgesehen ist, wobei zwischen den Belüftungsöffnungen der gegenüberliegenden Seiten innerhalb der Abdeckung die Haltevorrichtung oder das Hängemittel für die Tablette vorgesehen ist, um eine Durchzugsmöglichkeit der Raumluft durch den Innenraum der Abdeckung und insbesondere an der Tablette vorbei bereitzustellen. Bevorzugt kommt hier an zumindest einer, besonders bevorzugt an beiden gegenüberliegenden Seiten eine Vielzahl ab Belüftungsöffnungen zum Einsatz. Vorzugsweise liegt die Öffnungsfläche der Summe der Belüftungsöffnungen einer Seite im Bereich von 20cm² bis 40cm². Vorzugsweise entspricht die Oberfläche zumindest einen Belüftungsöffnung der ersten Seite im Wesentlichen der Oberfläche der zumindest einen Belüftungsöffnung der zweiten Seite der Abdeckung. Vorzugsweise liegt die Gesamtöffnungsfläche der Summe der Belüftungsöffnungen beider Seiten im Bereich von 40cm² bis 80cm², besonders bevorzugt im Bereich von 45cm² bis 65cm².

Als besonders vorteilhaft hat sich eine Gestaltung derart herausgestellt, dass die zumindest eine Belüftungsöffnung der zweiten Seite eine Projektion der zumindest einen Belüftungsöffnungen der gegenüberliegenden ersten Seite ist. Auf diese Weise kann eine besonders gute Belüftung der Im Innenraum angeordneten Tablette ermöglicht werden, um die Sorption zu verbessern. Vorzugsweise kommt auch hier an beiden Seiten jeweils eine Vielzahl an Belüftungsöffnungen zum Einsatz. Bevorzugt ist zumindest ein Teil der Oberfläche zumindest einer Belüftungsöffnung auf dem Niveau der im Innenraum angeordneten Tablette.

Ein weiterer Vorteil ist die Unterteilung der Abdeckung in zumindest zwei Bereiche, wobei einer ein Abdeckungsbereich und ein weiterer ein Öffnungsbereich ist, wobei letzterer nach Öffnung desselben einen Eingriff in den Innenraum zur Befüllung der Vorrichtung mit einer Tablette ermöglicht. Vorzugsweise ist die Abdeckung als Baugruppe aus zumindest den besagten Bauteilen zusammengesetzt und sie sind auf beliebige Weise lösbar oder beweglich zueinander verbunden. In einem bevorzugten Ausführungsbeispiel ist der Abdeckungsbereich mit dem Auffangbehälter fest verbunden oder verbindbar und umschließt vorzugsweise einen Großteil des Innenraums. Der Öffnungsbereich ist zur Befüllung der Vorrichtung mit einer Tablette zu öffnen, beispielsweise durch Gestaltung eines Deckels, einer Klappe, eine Schiebetür, einer schubladenartigen Lösung oder eine anderen geeigneten Bauform, welche jeweils eine Öffnung und so dann einen Eingriff in den Innenraum für den Anwender ermöglicht.

Besonders vorteilhaft hat sich der Einsatz eines Öffnungsbereichs erweisen, der als ein hinsichtlich des Abdeckungsbereichs verschwenkbarer Deckel gestaltet ist. Diese Bauform ist technisch besonders einfach zu realisieren und für den Anwender einfach zu handhaben. Der Abdeckungsbereich ist dabei vorzugsweise fest mit dem Auffangbehälter verbunden oder verbindbar, beispielsweise über geeignete Klemmmittel oder Schnappverbindungsmittel. Vorzugsweise ist zudem zumindest eine Gelenkverbindung, insbesondere ein Scharnier zwischen dem Abdeckungsbereich und dem Deckel vorgesehen. Zudem hat es sich als vorteilhaft herausgestellt, einen Deckel zu verwenden, welcher das Hängemittel umfasst, derart, dass eine Öffnung des Deckels auch zu einer Verschwenkung des Hängemittel hinsichtlich des Abdeckungsbereichs führt, um eine Befüllung der Vorrichtung mit einer Tablette zu erleichtern. Besonders bevorzugt kommt eine derartige Ausgestaltung bei der Verwendung eines dornförmigen Hängemittels zum Einsatz, wobei sich das dornförmige Hängemittel im geschlossenen Zustand des Deckels im Wesentlichen parallel zum Auffangbehälterboden und/oder zum Substrat erstreckt. Bei der Öffnung wird das Hängemittel derart hinsichtlich des Abdeckungsbereichs verschwenkt, dass sich das dornförmige Hängemittel im Wesentlichen rechtwinklig zum Auffangbehälterboden und/oder zum Substrat erstreckt. Auf diese Weise kann eine besonders einfache Befüllmöglichkeit für den Anwender insbesondere unter Nutzungsmöglichkeit der Schwerkraft bereitgestellt werden. Bei dem Einsatz eines das dornförmigen Hängemittel umfassenden Deckels hat es sich ferner als vorteilhaft herausgestellt, selbiges im Bereich oder der Nähe der Schwenkachse des Deckels anzuordnen, um die Standsicherheit der Vorrichtung insbesondere bei eingelegter Tablette zu erhöhen.

Ein weiterer Vorteil ist die Ausstattung der Abdeckung mit zumindest einem von einer Innenwand der Abdeckung in Richtung Innenraum ragenden Abstandselement, insbesondere in Form einer Rippe oder eines Vorsprungs, um eine definierte Beabstandung einer Tablette von der Innenwand zu ermöglichen. Durch ein derartiges Abstandselement kann beispielsweise verhindert werden, dass die Innenwand der Abdeckung die Sorptionsoberfläche der Tablette ver- oder abdeckt, was zu einer Beeinträchtigung der Sorptionsrate führen könnte.

Ein weiterer Vorteil ist die Gestaltung des zumindest einen Abstandselementes derart, dass es eine eindeutige Positionierung und insbesondere drehsichere Fixierung einer Tablette hinsichtlich des Hängemittels ermöglicht. Hierbei können beispielsweise mehrere Abstandselemente, vorzugsweise in Form von Rippen zum Einsatz kommen, die unterschiedlich weit in den Innenraum hineinragen. Auf diese Weise kann eine Art Negativform der Tablette durch die Abstandselemente bereitgestellt werden, die ein Abrutschen der Tablette von dem Hängemittel verhindern können. Auch können ein oder mehrere Abstandsmittel derart gestaltet sein, dass sie beispielsweise in Aussparungen, wie etwa Nuten oder Öffnungen oder Bohrungen eingreifen oder selbst einen Eingriff von vorstehenden Bereichen einer Tablette ermöglichen, so dass insbesondere eine drehsichere Fixierung der Tablette ermöglicht werden kann.

Ferner hat es sich als vorteilhaft herausgestellt, dass mehrere Abstandselemente zum Einsatz kommen, die jeweils unterschiedlich tief oder weit in den Innenraum hineinragen und/oder zumindest ein Abstandselement, welches unterschiedliche tief in den Innenraum ragende Bereiche aufweist, insbesondere um eine Aufnahmemöglichkeit von Tabletten mit unterschiedlichen Stärken und/oder unterschiedlich gestalteten Nuten für die hineinragenden Bereiche der Abstandselemente zu ermöglichen. Ein weiterer Vorteil ist die Ausrüstung der Haltevorrichtung mit einem an einer ersten Seite der Vorrichtung vorgesehenen Befestigungsabschnitt für das Hängemittel, von dem sich das Hängemittel von der ersten Seite der Vorrichtung in Richtung der gegenüberliegenden zweiten Seite erstreckt, wobei die Haltevorrichtung an dieser zweiten Seite eine Aufnahme in Form eines Gegenlagers für das Hängemittel umfasst, wobei das Hängemittel von der Aufnahme lösbar gestaltet ist, um eine einfache Befüllung der Vorrichtung mit einer Tablette aufweisend eine als Durchgangsöffnung, Durchgangsloch oder durchgehenden Bohrung gestaltete Aussparung zu ermöglichen und um eine sichere Fixierung des Hängemittels und somit der Tablette zu gewährleisten. Insbesondere kann eine derartige Bauform in Verbindung mit oben beschriebener zumindest zweiteiliger Abdeckung sinnvoll sein, bei der der Befestigungsabschnitt für das Hängemittel an einem klapp- oder schwenkbaren Deckel vorgesehen werden kann. Eine weitere nicht beanspruchte Ausführungsform ist die Bereitstellung einer Tablette beinhaltend ein hygroskopisches Luftentfeuchtungsmittel zur Sorption von Feuchtigkeit aus Raumluft und aufweisend einen Tablettenkörper mit einer Sorptionsoberfläche, wobei der Tablettenkörper eine Aussparung zur Aufnahme eines dornförmig gestalteten Hängemittels zum Aufhängen der Tablette aufweist. Insbesondere sind die Merkmale einer Tablette sowie ein Herstellungsverfahren einer Tablette denkbar wie in der EP1426105A1 beschrieben, welche insoweit die vorliegende Offenbarung ergänzt. Besonders vorteilhaft ist dabei der Einsatz einer Tablette, deren Sorptionsoberfläche, also als für die Sorption von Feuchtigkeit aus Raumluft zur Verfügung stehende Oberfläche, inklusive der Oberfläche der Tablette im Bereich der Aussparung eine Größe im Bereich von 290² bis 340cm² aufweist.

Ein weiterer Vorteil der nicht beanspruchte Ausführungsform ist die Gestaltung der Aussparung als sich durch den Tablettenkörper erstreckende Durchgangsloch oder Durchgangsöffnung oder Bohrung.

Ferner kann es in der nicht beanspruchte Ausführungsform als vorteilhaft erweisen, zumindest eine als Sorptionsoberfläche vorgesehene Außenseite des Tablettenkörpers mit Bereichen unterschiedlichen Niveaus auszurüsten, um zur Erhöhung der Sorptionsrate von Feuchtigkeit aus Raumluft die zur Verfügung stehende Sorptionsoberfläche zu vergrößern.

In einer nicht beanspruchte Ausführungsform weist der Tablettenkörper eine im Wesentlichen zylindrische Grundform einer Oberseite und einer Unterseite auf, wobei die Oberseite und/oder die Unterseite wellenartig gestaltet ist, um zur Erhöhung der Sorptionsrate von Feuchtigkeit aus Raumluft die zur Verfügung stehende Sorptionsoberfläche zu vergrößern.

Ein weiterer Grundgedanke der vorliegenden Erfindung ist die Bereitstellung eines Systems bestehend aus einer beschriebenen Vorrichtung und einer beschriebenen Tablette.

Vorzugsweise weist die Vorrichtung dabei eine Abdeckung mit Belüftungsöffnungen auf, wobei die Gesamtöffnungsfläche aller Belüftungsöffnungen vorzugsweise im Bereich von 40cm² bis 80cm² liegt, besonders bevorzugt im Bereich von 45cm² bis 65cm². Vorzugsweise sind die Belüftungsöffnungen zumindest an zwei gegenüberliegenden Seiten der Abdeckung angeordnet, wobei die Tablette bevorzugt innerhalb der Abdeckung zwischen besagten die Belüftungsöffnungen aufweisenden Bereichen angeordnet ist, um eine Durchzugsmöglichkeit zu ermöglichen.

Besonders vorteilhaft ist dabei der Einsatz einer Tablette, deren Sorptionsoberfläche, also als für die Sorption von Feuchtigkeit aus Raumluft zur Verfügung stehende Oberfläche, inklusive der Oberfläche der Tablette im Bereich der Aussparung eine Größe im Bereich von 290² bis 340cm² aufweist.

Besonders bevorzugt kommen besagte Belüftungsöffnungen und eine Tablette zum Einsatz, wobei das Oberflächenverhältnis von der Tablettenoberfläche zur Öffnungsoberfläche aller Belüftungsöffnungen im Bereich von 7,25 - 4,25 liegt.

In einer vorteilhaften Weiterbildung weist die Vorrichtung zusätzlich im Bereich des Auffangbehälters eine Aufnahme für eine weitere Tablette auf, insbesondere um dem Anwender ein System bereitzustellen, welches eine weitere Tablette zur Nachbefüllung der Einheit aufweist, wobei auf Verpackungsmaterial verzichtet werden kann, da als Umverpackung der zweiten Tablette die Vorrichtung selbst zu Anwendung kommt. Auch kann eine derartige Aufnahme im Bereich des Auffangbehälters zur sicheren Verwahrung der zur Anwendung kommenden Tablette im Verkaufsraum zum Einsatz kommen. So kann beispielsweise im Auslieferungszustand der Vorrichtung die mit dem Hängemittel verbindbare Tablette in besagter Aufnahme sicher verwahrt werden.

In einer vorteilhaften Weiterbildung der Erfindung weist die Vorrichtung mehr als eine Haltevorrichtung für mehrere Tabletten auf. Vorzugsweise sind zwei Haltevorrichtungen für zwei Tabletten vorgesehene, um die Absorptionsrate zu erhöhen. Jede Haltevorrichtung umfasst dabei jeweils ein Hängemittel für eine Tablette. Alternativ kann auch lediglich eine Haltevorrichtung umfassend zwei oder mehr Hängemittel für zwei oder mehr Tabletten. Besagte Hängemittel dienen dabei vorzugsweise wie oberhalb beschrieben zum Aufhängen der Tablette oberhalb des Auffangbehälters, wobei vorzugsweise jedes Hängemittel einen Kontakt nahezu der gesamten Sorptionsoberfläche mit der Raumluft ermöglicht, um die freie und zur Sorption von Feuchtigkeit zur Verfügung stehende Sorptionsoberfläche der Tablette zu vergrößern. Vorzugsweise sind die Haltevorrichtungen und/oder die Hängemittel derart angeordnet, dass alle zur Sorption in der Vorrichtung zur Anwendung kommenden Tabletten beabstandet zueinander angeordnet sind und sich insbesondere nicht berühren. Bevorzugt weisen alle Tabletten eine ähnliche, jedoch voneinander verwetze Position innerhalb oder an der Vorrichtung auf. So kann es beispielsweise beim Einsatz von zwei im Wesentlichen zylinderförmigen Tabletten von Vorteil sein, die Tabletten derart anzuordnen, dass die Deck- und Bodenflächen der Tabletten parallel zueinander angeordnet sind oder besonders bevorzugt in einer Ebene liegen. Vorzugsweise sind die Tabletten in einem solchen Fall derart in der Vorrichtung angeordnet, dass die Deck- und die Bodenflächen benachbart und/oder gegenüberliegende zu Belüftungsöffnungen oder Belüftungsschlitzen der Vorrichtung liegen, um eine besonders gute Sorption zu ermöglichen. Eine derartige Vorrichtung kann auch eine Aufnahmemöglichkeit für mehrere Tabletten im Bereich des Auffangbehälters oder mehrere Aufnahmemöglichkeiten aufweisen.

Bevorzugte Ausführungsformen von erfindungsgemäßen Vorrichtungen, Tabletten und Systemen werden in den beiliegenden Figuren gezeigt.

### Darin zeigt

Figur 1 eine perspektivische Ansicht einer erfindungsgemäßen Vorrichtung,
Figur 2 die Vorrichtung aus Figur 1 in Befüllungsposition,
Figur 3 eine geschnittene Seitenansicht durch die Schnittlinie A-A der Vorrichtung aus Figur 1 ohne eingelegte Tablette,
Figur 4 eine teilgeschnittene perspektivische Ansicht durch die Schnittlinie B-B der Vorrichtung aus Figur 1 mit eingelegter Tablette, also ein erfindungsgemäßes Sytem,
Figur 5 eine perspektivische Ansicht einer erfindungsgemäßen Tablette,
Figur 6 eine schematische Ansicht einer Alternative einer erfindungsgemäßen Vorrichtung mit eingelegter Tablette, also eines erfindungsgemäßen Systems.

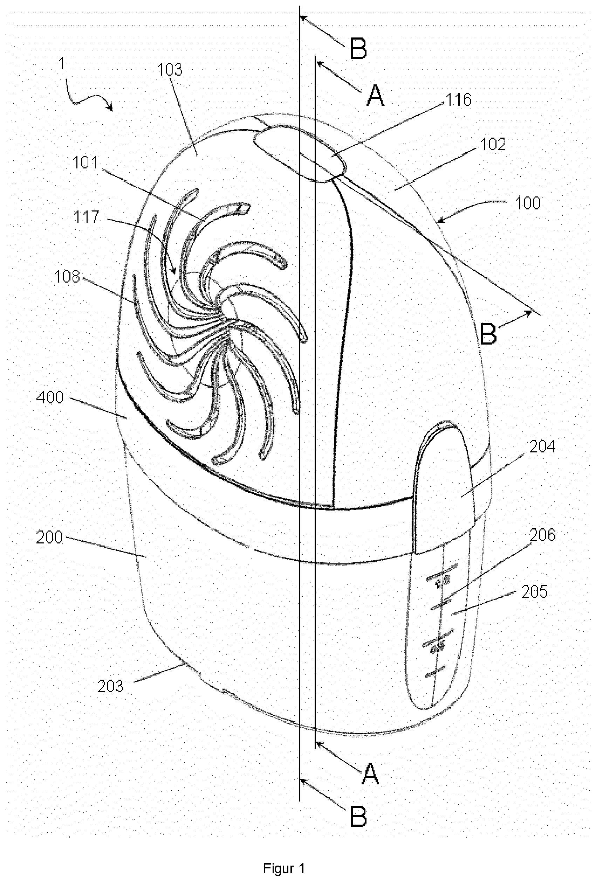

Figur 1 zeigt eine perspektivische Ansicht eines erfindungsgemäßen Luftentfeuchters 1 zur Sorption von Feuchtigkeit aus Raumluft. Dabei kann unter Sorption sowohl eine Absorption, als auch eine Adsorption oder auch eine Kombination von Ab- und Adsorption verstanden werden. Dieser setzt sich aus mehreren aus einem Kunststoffmaterial gefertigten Bauelementen zusammen. Das Oberteil des Luftentfeuchters 1 wird durch eine Abdeckung 100 gebildet. Selbige setzt sich zusammen aus einem Abdeckbereich 102 und einem hinsichtlich des Abdeckbereichs 102 verschwenkbaren Deckel 103. Im abgebildeten verschlossenen Zustand des Luftentfeuchters 1 umschließt besagte aus Deckel 103 und Abdeckbereich 102 bestehende Abdeckung 100 einen Innenraum 101. Im Innenraum 101 ist eine von der Abdeckung 100 verdeckte Haltevorrichtung für eine Tablette vorgesehen, beinhaltend ein hygroskopisches Luftentfeuchtungsmittel und aufweisend einen im wesentlichen zylindrischen Tablettenkörper, mit einer an zwei gegenüberliegenden Stirnseite sowie einer Mantelseite vorgesehenen Sorptionsoberfläche. Um eine Sorption der Feuchtigkeit zu ermöglichen, weist die Abdeckung 100 im Bereich des Deckels 103 eine Vielzahl von Belüftungsschlitzen 108 auf. Selbige sind auch auf der gegenüberliegenden Seite der Vorrichtung auf dem Abdeckbereich 102 vorgesehen, wobei die Belüftungsschlitze 108 dort eine Projektion der Belüftungsschlitze 108 des Deckels 103 sind, um eine besonders gute Belüftung im Sinne einer Durchzugsmöglichkeit durch den Innenraum 101 bereitzustellen. Die Belüftungsschlitze 108 sind jeweils propellerartig angeordnet und münden in einem Belüftungstrichter 117, wobei dessen Hals in Richtung Innenraum 101 hineinragt. Auf selbige Weise ist der Abdeckbereich 102 auf der gegenüberliegenden Seite gestaltet. Dabei ist die Abdeckung 100 derart gestaltet, dass die Stirnseiten der Tablette mittels besagter Haltevorrichtung in Richtung der Belüftungsschlitze 108 des Deckels 103 und des Abdeckbereichs 102 weisen. Die Belüftungsschlitze 108 erstrecken sich so weit von dem Belüftungstrichtern 117 nach außen weg, dass die lichte Weite der Belüftungsöffnung, also der Abstand zwischen zwei auf dem Abdeckbereich 102 oder dem Deckel 103 gegenüberliegenden Endpunkten der Belüftungsschlitze 108 zumindest so groß ist, bevorzugt jedoch größer ist, als der Durchmesser einer zum Einsatz kommenden Tablette. Aufgrund der propellerartigen Anordnung der Belüftungsschlitze 108 liegt die jeweils eine Stirnseite der Tablette also zumindest in der Projektion aller Belüftungsschlitze 108, vorzugsweise ist selbige jedoch größer als eine Stirnseite. Durch eine derartige Gestaltung kann eine verbesserte Belüftung der Tablette, insbesondere durch eine gleichmäßige und dauerhafte Durchströmung der Abdeckung 100 ermöglicht werden.

Das Unterteil des Luftentfeuchters 1 bildet ein Auffangbehälter 200 umschließend einen Hohlraum für eine Salzlösung, welche durch die Sorption von Feuchtigkeit aus Raumluft über die Tablette entsteht. Der Auffangbehälter 200 weist einen im Wesentlichen oval geformten Behälterboden 203 auf, der als Standfläche für ein Substrat einen bodenseitig umlaufenden Rand beinhaltet sowie insbesondere zur Erhöhung der Stabilität eine vom umlaufenden Rand ausgehende und in Richtung Hohlraum gerichtete Wölbung. In Richtung Oberteil erstreckt sich eine Behälterwand 203, welche zumindest auf einer Seite mit einem zumindest teilweise transparenten oder durchscheinenden Sichtfenster 205 mit einer Skala 206 ausgestattet ist, um dem Anwender eine Möglichkeit bereitzustellen, den Stand oder das Niveau der Salzlösung im Hohlraum des Auffangbehälters 200 einzusehen. Der Auffangbehälter 200 ist über ein Schnappelement 204 mit der Abdeckung 100 verbunden. Ferner ist zwischen Abdeckung 100 und Auffangbehälter 200 ein Auslaufschutz 400 vorgesehen, der einerseits ein Abfließen der Salzlösung von der im Innenraum 101 vorgesehenen Tablette in den Hohlraum des Auffangbehälters 200 ermöglicht. Auf der anderen Seite jedoch ein aus beispielsweise dem Umkippen des Luftentfeuchters 1 resultierendes Auslaufen der Salzlösung aus diesem Hohlraum verhindert.

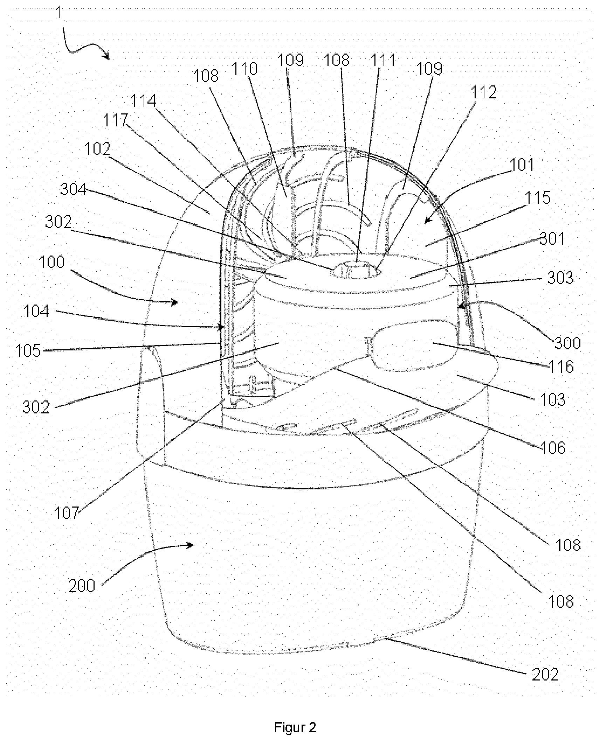

Figur 2 zeigt den Luftenfeuchter 1 aus Figur 1 in Befüllungsposition. Hierzu ist der mit dem Abdeckbereich 102 über Scharniere 107 verbundene Deckel 103 um letztere hinsichtlich des Abdeckbereichs 102 verschwenkt worden und gibt nun eine Öffnung 104 frei durch die beispielsweise ein Eingriff in den Innenraum 101 ermöglicht werden kann. Das Öffnen erfolgt mittels der an der Oberseite des Deckels 103 gelegenen Öffnungshilfe 116, welche eine Verschlussmöglichkeit über ein Schnappverbindungsmittel des Deckels 103 mit dem Abdeckbereich 102 bereitstellt. Besagte Öffnung 104 wird durch eine Öffnungskante 105 des Abdeckbereichs 102 begrenzt. Der Deckel 103 wiederum weist eine Deckelkante 106 auf. Im geschlossenen Zustand des Luftentfeuchters 1 liegen die Kanten 105, 106 aneinander an, so dass der Innenraum 101 durch die Abdeckung 100, abgesehen von den Belüftungsschlitzen 108, geschlossen ist.

Der Deckel 103 weist ferner ein Hängemittel in Form eines vorstehenden Doms 111 mit einer im Wesentlichen hohlzylindrischen Grundform auf, welcher Teil der Haltevorrichtung ist und zum Halten oder zur Lagerung einer Tablette 300 dient. Besagte Tablette 300 weist einen im Wesentlichen zylindrisch gestalteten Tablettenkörper 301 auf und besteht zu einem Großteil aus gepresstem Calciumchlorid. Die Kanten der Tablette 300 weisen eine Fase 303 auf, insbesondere um ein Brechen der Kanten zur vermeiden und/oder um ein Einsetzen der Tablette 300 in den Luftentfeuchter 1 zu erleichtern. Die äußere Oberfläche der Tablette 300 fungiert als Sorptionsoberfläche 302 für die Sorption der Feuchtigkeit aus der Raumluft. Die Tablette 300 weist ferner eine als durchgehende und koaxial zur Zylinderachse verlaufende Durchgangsöffnung oder Bohrung gestaltete zentrische Aussparung 304 auf, welche einen größeren Durchmesser aufweist, als der Durchmesser des Domes 111. Selbige dient durch die Bereitstellung einer Aufnahmemöglichkeit des Domes 111 der Aufhängung der Tablette 300 im Innenraum 101 des Luftentfeuchters 1. Da der Dorn 111 mit dem Deckel 103 über einen Befestigungsabschnitt, im vorliegenden Fall durch Anformung an den Belüftungstrichter 117 verbunden ist, geht ein Verschwenken des Deckels 103 in die geschlossene Position einher mit einem Verschwenken des Domes 111 und somit auch der Tablette 300. In der geschlossenen Position verläuft die Achse des Doms 111 im Wesentlichen parallel zum Behälterboden 202 und/oder zum Substrat. In dieser Position hängt die Tablette an dem durch die Aussparung 304 verlaufenden Dorn 111, so dass das erfindungsgemäße Hängemittel und insbesondere der Dorn 111 einen Kontakt nahezu der gesamten Sorptionsoberfläche 302 mit der Raumluft ermöglicht, um die freie und zur Sorption von Feuchtigkeit zur Verfügung stehende Sorptionsoberfläche 302 der Tablette 300 zu vergrößern.

In der gezeigten Befüllungsposition, bei der die Achse des Domes 111 im Wesentlichen orthogonal zum Behälterboden 202 und/oder zum Substrat verläuft, ist eine Befüllung des Luftentfeuchters 1 mit einer Tablette 300 besonders einfach möglich. Der Anwender muss lediglich die Aussparung 304 in Höhe des vorstehenden Endes des Domes 111 bringen und kann die Tablette 300 und Ausnutzung der Schwerkraft einfach in Richtung Deckel 103 gleiten oder fallen lassen.

Der Dorn 111 ist ferner mit sich axial erstreckenden und in radiale Richtung von der Außenseite des Domes 111 hervorstehenden Abstandselementen in Form von vorstehenden Abstandsrippen 112 ausgestattet. Die Abstandsrippen 112 sind genau so groß, dass ein sicherer Halt der Tablette 300 über die Aussparung 304 ermöglicht werden kann und dass eine Beabstandung der inneren Oberfläche der Tablette 300 im Bereich der Aussparung 304 von der äußeren Manteloberfläche des Domes 11 ermöglicht wird. So kann eine definierte und hinsichtlich der Kontaktfläche möglichst kleine Auflagemöglichkeit für die Tablette 300 im Bereich ihrer Aussparung 304 bereitgestellt werden, um die Kontaktfläche zwischen Tablette 300 und Dorn 111 zu minimieren.

Auf der dem Deckel 103 gegenüberliegenden Seite ist im Bereich des Belüftungstrichters 117 eine von einer Innenwand 115 des Abdeckbereichs 102 in den Innraum 101 vorstehende Aufnahme 114 vorgesehen. Selbige ist derart gestaltet, dass eine Auflagemöglichkeit oder ein Gegenlager für den Dorn 111 in der geschlossenen Position bereitgestellt werden kann, um eine sichere Haltemöglichkeit für die Tablette 300 zu gewährleisten. Ferner ist die Innenwand 115 mit einer Vielzahl von in den Innenraum 101 ragenden Verstärkungsrippen 109 ausgestattet, so dass der Abdeckbereich 102 und auch der Deckel 103 lediglich eine geringe Wandstärke aufweisen können, der Luftentfeuchter 1 jedoch dennoch stabil ist. Zudem sind mehrere in den Innenraum 101 ragende Abstandselemente 110 vorgesehen, die mitunter auch an einige der Verstärkungsrippen 109 angeformt sind. Die Abstandselemente 110 sind als Rippen ausgestaltet, können jedoch auch andere sich eignende Formen aufweisen und dienen der definierten Beabstandung einer Tablette 300 von der Innenwand 115 im geschlossenen Zustand des Luftenfeuchters 1. Auf diese Weise kann verhindert werden, dass die Innenwand 115 Bereiche der Sorptionsoberfläche 302 der Tablette 300 abdeckt, so dass nicht ausreichend freie Sorptionsoberfläche 302 für die Sorption der Feuchtigkeit aus der Raumluft zur Verfügung steht. Denkbar ist zudem die Nutzung der von der Innenwand 115 in Richtung Innenraum 101 ragenden Abstandselemente 110 zur eindeutigen Positionierung, beispielsweise mittels Eingriff in die Fase 303 der Tablette oder zur drehsichern Fixierung einer Tablette 300 hinsichtlich des Domes 111, insbesondere durch Verwendung einer Tablette 300 mit einer Nut oder einer Öffnung, in die beispielsweise eines der Abstandselemente 110 eingreift.

Ferner sind in Figur 2 die Belüftungsschlitze 108 in geschlossener Position an gegenüberliegenden Seiten, nämlich an dem Abdeckbereich 102 und gegenüberliegend an dem Deckel 103 zu erkennen, um eine Belüftung der Tablette 300 mit Raumluft zur Sorption der Feuchtigkeit aus der Raumluft zu ermöglichen. Der Dorn 111 ist als Haltevorrichtung dabei in geschlossener Position des Luftentfeuchters 1 zwischen beiden einander gegenüberliegenden und mit Belüftungsschlitzen 108 ausgestatteten Bereichen angeordnet, um eine Durchzugsmöglichkeit der Raumluft durch den Innenraum 101 der Abdeckung 100 bereitzustellen. Genauer gesagt ist der Dorn 11 genau in der Mündung des Belüftungstrichters 117 des Deckels 103 angeordnet, die Aufnahme 114 wiederum in der Mündung des Belüftungstrichters 117 des Abdeckbereichs 102. Dabei sind die beiden gegenüberliegenden und mit Belüftungsschlitzen 108 ausgestatteten Bereiche sowie die beiden Belüftungstrichter 117 derart gestaltet, dass der eine Bereich eine Projektion des anderen Bereichs ist.

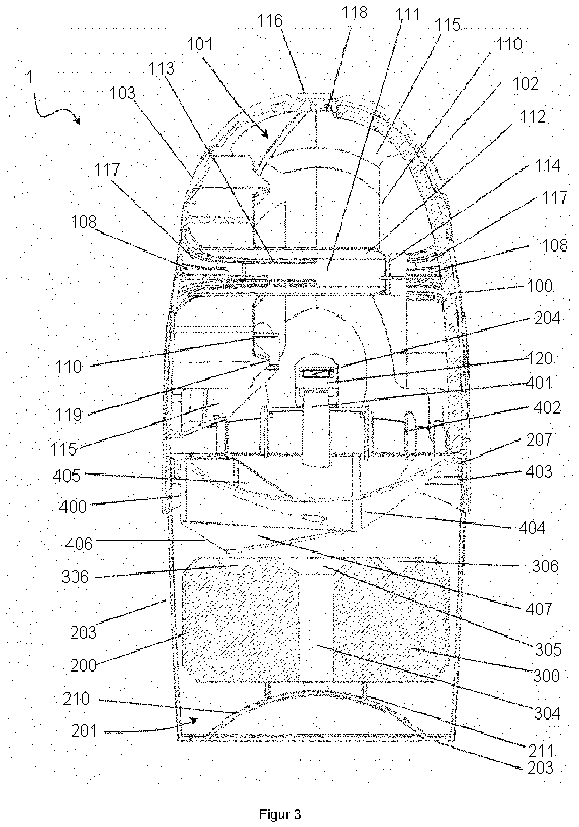

Figur 3 zeigt eine geschnittene Seitenansicht durch die Schnittlinie A-A des Luftentfeuchters 1 aus Figur 1 in geschlossener Position. Der besseren Übersicht halber weist der gezeigte Luftenfeuchter 1 im Bereich des Domes 111 keine Tablette 300 auf. Jedoch ist im Auffangbehälter 200 oberhalb des Behälterbodens 202, der im Mittelbereich durch eine in den Hohlraum 201 ragende Wölbung 210 bereitgestellt wird, auf selbiger Wölbung 210 eine Tablettenaufnahme 211 vorgesehen. Hier kann eine Tablette 300 verwahrt werden, beispielsweise um dem Anwender eine Nachfüllmöglichkeit bereitzustellen. Ach kann die Tablettenaufnahme 211 zur Fixierung einer Tablette 300 im Auffangbehälter 200 als Transportsicherung dienen. Die Tablette 300 ist vorzugsweise in einer Umverpackung aus einem Folienmaterial verpackt und ist vor der Nutzung des Luftentfeuchters 1 aus dem Aufnahmebehälter 200 zu entnehmen. Die Tablette 300, die zur Nutzung - wie oberhalb beschrieben auf das als Dorn 111 gestaltete Hängemittel geschoben werden kann - weist hierfür die Aussparung 304 auf, welche zumindest auf einer Stirnseite der Tablette als Trichter 305 gestaltet ist. Zudem weist die Tablette 300 eine um die Aussparung herum verlaufende, jedoch radial beabstandete Nut auf. Diese besondere Form verleiht der Tablette 300 eine größere Sorptionsoberfläche, so dass die Sorptionsrate im Vergleich zu herkömmlichen, insbesondere mit flachen Stirnflächen ausgestatteten Tabletten 300 verbessert werden kann.

Zwischen der Abdeckung 100 und dem Auffangbehälter ist -wie oberhalb angesprochen - der Auslaufschutz 400 vorgesehen. Selbiger weist als Schnappelemente gestaltete Befestigungsabschnitte 401 auf und ist über selbige an einem Montageabschnitt 120 der Abdeckung 100 mit letztgenannter verbunden. Der Montageabschnitt 120 dient auch der Befestigung des Auffangbehälters 200 über dessen Schnappelement 204 an der Abdeckung 100. Zudem weist der Auslaufschutz 400 eine Vielzahl von in Richtung Innenraum 101 sowie mit der Innenwand 115 in Eingriff bringbare und vorstehende Führungsrippen 402 auf, die eine Montage des Auslaufschutzes 400 and der Abdeckung 100 erleichtern. Zur Befestigung des Auslaufschutzes 400 and dem Auffangbehälter 200 weist der Auslaufschutz 400 einen umlaufenden Kragen 403 auf, mit welchem der Auslaufschutz 400 auf eine obere Kante 207 der Behälterwand 203 aufgesetzt werden kann. Dabei sind beide Bereiche derart gestaltet, dass eine dichte Verbindung bereitgestellt werden kann. Denkbar ist hier auch der Einsatz einer optionalen Dichtung, um die Abdichtung weiter zu verbessern. Der Auslaufschutz 400 weist einen Trichter 404 auf, welche bereichsweise in den Hohlraum 201 ragt. Der Trichter 404 dient der Sammlung der Salzlösung, welche daraufhin durch eine obere Ablauföffnung 405 in einen Ablaufkanal 407 und schließlich durch eine untere Ablauföffnung 406 in den Hohlraum 201 des Auffangbehälters 200 fließt. Dabei sind der Trichter 404 sowie der Ablaufkanal 407 derart konstruiert, ragen insbesondere derart in den Hohlraum hinein und sind derart von der Behälterwand 203 beabstandet, dass ein Zurücklaufen der Salzlösung selbst bei einem Umkippen des Luftentfeuchters 1 durch die untere Auslauföffnung 406 erschwert oder nahezu unmöglich wird.

Im oberen Teil des Luftentfeuchters 1 sind die gegenüberliegenden Belüftungstrichter 117 des Abdeckbereichs 102 und des Deckels 103 zu erkennen, wobei sich die Belüftungsschlitze 108 jeweils bereichsweise in den Belüftungstrichter 117 erstrecken, um die Belüftung des Innenraumes 101 und somit der dort anzuordnenden Tablette 300 zu verbessern. Der sich von dem Belüftungstrichter 117 des Deckels 103 in Richtung der Aufnahme 114 am Belüftungstrichter 117 des Abdeckbereichs 102 erstreckende hohlzylindrische Dorn 111 weist zudem in selbige Erstreckungsrichtung verlaufende Belüftungsschlitze 113 auf, um die Oberfläche einer eingehängten Tablette 300 im Bereich ihrer Aussparung 304 zu belüften und um somit die freie Sorptionsoberfläche der Tablette 300 zu vergrößern. Die radial von der äußeren Oberfläche des Domes 111 vorstehende und in besagte Erstreckungsrichtung verlaufende Abstandsrippen 112 dienen der Minimierung der Kontaktfläche zwischen Tablette 300 und Dorn 111. Der hohlzylindrische Dorn 111 mündet in der in Figur 2 abgebildeten und in Figur 3 durch die Tablette 300 verdeckten Aufnahme 114, welche ebenfalls hohl gestaltet ist und wiederum in den Belüftungstrichter 117 des Abdeckbereichs 102 führt. Somit kann eine Durchzugsmöglichkeit für die Raumluft durch den Luftentfeuchters 1 ermöglicht werden, beispielsweise in den Belüftungstrichter 117 des Deckels 103, den hohlzylindrischen Dorn 111, die Aufnahme 114 bis hin zum Belüftungstrichter 117 des Abdeckbereichs 102 und in entgegengesetzte Richtung. Hierdurch wird eine besondere gute Belüftung der Oberfläche einer eingehängten Tablette 300 im Bereich ihrer Aussparung 304 gewährleistet. Es kann somit eine Durchzugsmöglichkeit durch die Aussparung 304 der Tablette 300 ermöglicht werden.

Der Deckel 103 sowie der Abdeckbereich 102 weisen zudem die in Richtung Innenraum 101 ragenden Abstandselemente 110 in Form von vorstehenden, an die jeweiligen Bauteile angeformten Rippen auf, die einen Abstand zwischen Tablette 300 und Innenwand 115 definieren, um die Kontaktfläche von Tablette 300 und Abdeckung 100 möglichst gering zu halten und um die freie Sorptionsoberfläche zu maximieren. Zudem sind an einigen der Abstandselemente 110 des Deckels 103 in den Innenraum 101 ragende Nocken 119 vorgesehen. Selbige sind auf einem Kreis radial um den Dorn 111 herum angeordnet und greifen bei eingelegter Tablette 300 in die oberhalb beschriebene umlaufende Nut 306 der Tablette 300 ein. Insbesondere kann durch diese Nocken 119 ermöglicht werden, dass Tabletten 300 unterschiedlicher Stärke aufgenommen und genutzt werden können. Zum einen kann eine abgebildete Tablette 300 mit einer Nut 306 verwendet werden. Zum anderen kann jedoch auch eine kleinere Tablette 300 zum Einsatz kommen, die lediglich eine Stärke derart aufweist, die im Wesentlichen dem Abstand zwischen dem in den Innenraum 101 ragenden Ende einer Nocke 119 und dem gegenüberliegenden Ende eines Abstandselementes 110 des Abdeckbereiches 102 entspricht. Auch kann durch selbige Nocken 119 eine Möglichkeit einer eindeutigen Positionierung einer Tablette 300 und insbesondere einer drehsicheren Fixierung einer Tablette 300 hinsichtlich des Domes 111 ermöglicht werden. Hierzu eignet sich beispielsweise der Einsatz einer gezeigten Tablette 300, die jedoch beispielsweise anstelle der Nut 306 im selben Bereich Sacklöcher zur Aufnahme der Nocken 119 aufweist.

Auch ist in Figur 3 besonders deutlich der Öffnungsmechanismus des Deckels 103 zu erkennen. An der Oberseite des Luftentfeuchters 1 weist der Deckel 103 wir oberhalb beschrieben eine Öffnungshilfe 116 aufweisend einen Haken auf, wobei korrespondierende Verbindungsmittel 118 aufweisend insbesondere eine Hakenaufnahme an dem Abdeckbereich 102 vorgesehen sind. Durch leichten Druck von oben auf die Öffnungshilfe 116 kann beschriebener Haken aus der Hakenaufnahme des Verbindungsmittels 118 ausgehängt werden, um den Deckel 103 für einen Wechsel in eine Befüllungsposition des Luftentfeuchters 1 hinsichtlich des Abdeckbereichs 102 zu verschwenken.

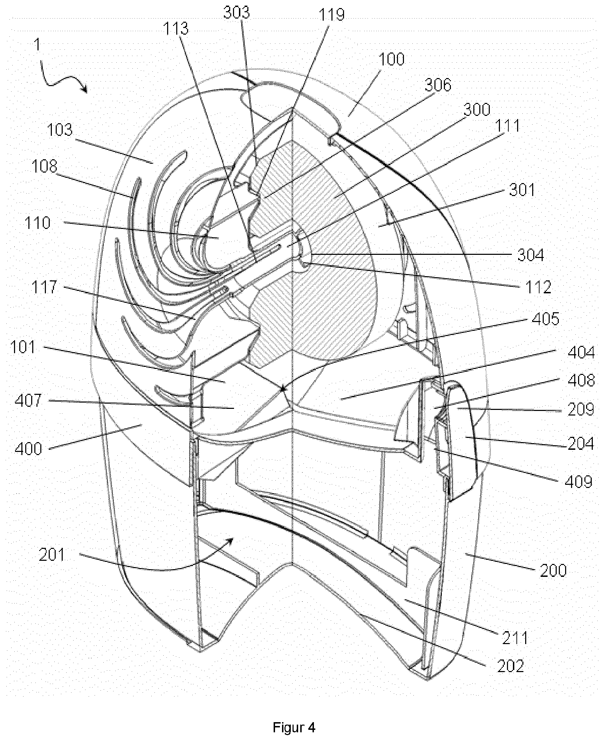

Figur 4 zeigt eine teilgeschnittene perspektivische Ansicht durch die Schnittlinie B-B der Vorrichtung aus Figur 1 mit eingelegter Tablette. Figur 4 zeigt somit ein erfindungsgemäßes System bestehend aus Luftenfeuchter 1 und Tablette 300. Der Dorn 111 erstreckt sich durch die Aussparung 304 der Tablette 300. Der hohlzylindrische Dorn 111 weist jedoch einen kleinen Durchmesser auf, als die Aussparung 304. Der Kontakt zwischen der Tablette 300 und dem Dorn 111 wird über die radial vorstehenden Abstandsrippen 112 bereitgestellt, so dass in den Zwischenräumen zwischen zwei Abstandsrippen 112 zwischen der Mantelfläche des Domes 111 und der Oberfläche der Aussparung 304 ein Abstand vorgesehen ist, um dort eine Belüftungsmöglichkeit der Tablette 300 über die Belüftungsschlitze 113 des Domes 111 zu ermöglichen. Die Belüftungsschlitze 113 erstrecken sich dabei von dem Dorn 111 über den Belüftungstrichter 117 bis in die Frontseite des Deckels 103 und münden in einigen der Belüftungsschlitze 108. Bevorzugt sind die Belüftungsschlitze 113 nur an den Seiten sowie an der Unterseite des Domes 111 vorgesehen, nicht jedoch an der Oberseite, um ein herauslaufen der Salzlösung aus dem Belüftungstrichter 117 in jedem Fall zu vermeiden.

Zur Fixierung der Tablette 300 innerhalb des Innenraums 101 sind die an den Deckel 103 und an selbigen angeformte und in den Innenraum 101 in Richtung Tablette 300 ragende Abstandselemente 110 vorgesehen, welche im Bereich der Nut 306 der Tablette 300 die vorstehenden Nocken 119 aufweisen. Die von der Tablette 300 sorbierte Feuchtigkeit tropft als Salzlösung in Richtung des unter der Abdeckung 100 angeordneten Auffangbehälters 200 und somit in den Trichter 404 des Auslaufschutzes 400. Durch die obere Auslauföffnung 405 gelangt die Salzlösung schließlich über den Auslaufkanal 407 in den Hohlraum 201 des Auffangbehälters 200. Figur 4 zeigt auch noch einmal die an den Behälterboden 202 angeformte und in den Hohlraum 201 ragende Tablettenaufnahme 211.

Zum Entleeren des Hohlraumes 201 des Auffangbehälters 201 ist der Luftentfeuchter 1 zudem mit einem Ausguss ausgestattet. Selbiger ist seitlich an dem Luftentfeuchter 1 vorgesehen und zwar auf der Höhe des Auslaufschutzes 400. Der Auslaufschutz 400 weist hierfür einen Ausgusskanal 409 auf, der in Richtung des Hohlraumes 201 offen ist und welcher an seinem anderen Ende durch eine Öffnung der Abdeckung 100 ragt und dort in einer Ausgussöffnung 408 an der Seite des Luftentfeuchters 1 mündet. Verschlossen wird die Ausgussöffnung 408 von einem öffenbaren Verschlusselement 209, welches an dem Schnappelement 204 zur Befestigung des Auffangbehälters 200 an der Abdeckung 100 vorgesehen ist.

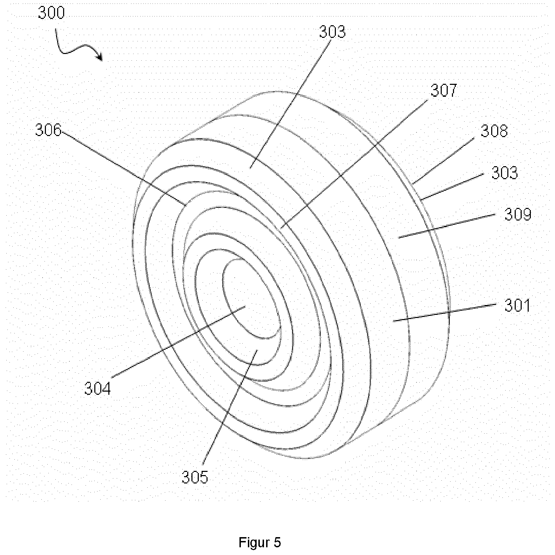

Figur 5 zeigte eine perspektivische Ansicht einer erfindungsgemäßen Tablette 300 beinhaltend ein hygroskopisches Luftentfeuchtungsmittel zur Sorption von Feuchtigkeit aus Raumluft und aufweisend einen im Wesentlichen zylindrischen Tablettenkörper 301 mit einer Oberseite umfassend die Deckfläche 307, einer Unterseite, umfassend eine Bodenfläche 308 sowie einer Mantelfläche 309. Die äußere Oberfläche der Tablette 300 ist die Sorptionsoberfläche 302 zur Sorption der Feuchtigkeit. Der Tablettenkörper 301 weist eine Aussparung 304 zur Aufnahme eines dornförmig gestalteten Hängemittels zum Aufhängen der Tablette 300 auf. Im gezeigten Ausführungsbeispiel ist die Aussparung 304 als durchgehende zylindrische Durchgangsöffnung oder Bohrung gestaltet, die von einer Deckfläche 307 durch den Tablettenkörper 301 bis zur Bodenfläche 308 reicht. Eine derartige Tablette 300 kann beispielsweise in einem in den Figuren 1 bis 4 gezeigten Luftentfeuchter 1 zum Einsatz kommen. Es ist jedoch alternativ denkbar, dass die Aussparung 304 nur als ein Sackloch, eine Mulde, eine Nut, eine Spalte oder eine anderweitige Vertiefung ausgebildet ist, die eine Befestigung an einem genannten Luftentfeuchter 1 ermöglicht. Auch Durchgangsöffnungen oder Löcher anderer Art, insbesondere mit einem anderen Querschnitt sind denkbar. Die Aussparung 304 ist in Richtung Deckfläche 307 in Form einer trichterförmigen Mulde 305 geweitet. Auf gleiche Weise kann die Aussparung auf der gegenüberliegenden Seite gestaltet sein. Zumindest die Oberseite der Tablette 300 ist zudem mit Bereichen unterschiedlichen Niveaus ausgestattet, um zur Erhöhung der Sorptionsrate von Feuchtigkeit aus Raumluft die zur Verfügung stehende Sorptionsoberfläche 302 zu vergrößern. Im vorliegenden Ausführungsbeispiel ist hierfür eine um die Aussparung 304 radial versetzt herumlaufende und im Querschnitt trichterförmige Nut 306 in der Deckfläche 307 vorgesehen. Selbige kann in einer Variante zusätzlich oder alternativ auch ausschließlich auf der Unterseite in der Bodenfläche 308 vorgesehen werden. Auch kann die Mantelfläche 309 eine derartige Gestaltung aufweisen. Selbstverständlich sind hier auch variierende Formen der Nut 306 oder der Einsatz ähnlicher Mittel denkbar, insbesondere eine Vielzahl von Sacklöchern, eine Wellenform oder andere Ausführungen, die eine Vergrößerung der Sorptionsoberfläche 302 ermöglichen. Durch besagte Nut 306 und die trichterförmige Mulde 305 weist besagte Tablette 300 in der Schnittansicht insbesondere an der Oberseite und/oder an der Unterseite eine wellenartige Gestaltung auf. Auch weist die Tablette 300 an den Kanten der Deckfläche 307 und der Bodenfläche 308 jeweils eine umlaufende Fase 303 auf, um die Handhabung der Tablette 300 zu vereinfachen. Natürlich ist es denkbar eine Tablette 300 einzusetzen, welche keine zylindrische Grundform aufweist. Die Tablette 300 kann auch anstelle eines runden Querschnittes einen ovalen, einen dreieckigen, einen vieleckigen oder einen beliebig gestalteten Querschnitt aufweisen, der sich zum Einsatz in einem Luftentfeuchter eignet.

Durch die Ausstattung der im Wesentlichen zylindrischen Tablette 300 mit einer Nut 306 in der Deckfläche 307, besagten Fasen 303 an Deckfläche 307 und Bodenfläche 308, der Aussparung 304 mit einer Mulde 305 im Bereich der Deckfläche 307 kann eine einfachere Handhabung ermöglicht und die Sorptionsoberfläche der Tablette 300 im Vergleich zur bekannten Tabletten mit reinen Zylinderformen um über 10% gesteigert werden, so dass eine verbesserte Sorptionsrate durch den Einsatz einer erfindungsgemäßen Tablette 300 ermöglicht werden kann. Die Oberfläche einer erfindungsgemäßen Tablette 300, wie sie im bevorzugten Ausführungsbeispiel gezeigt ist, die als Sorptionsoberfläche zur Verfügung steht, liegt inklusive der Oberfläche der Tablette 300 im Bereich der Aussparung 304 vorzugsweise im Bereich von 290² bis 340cm².

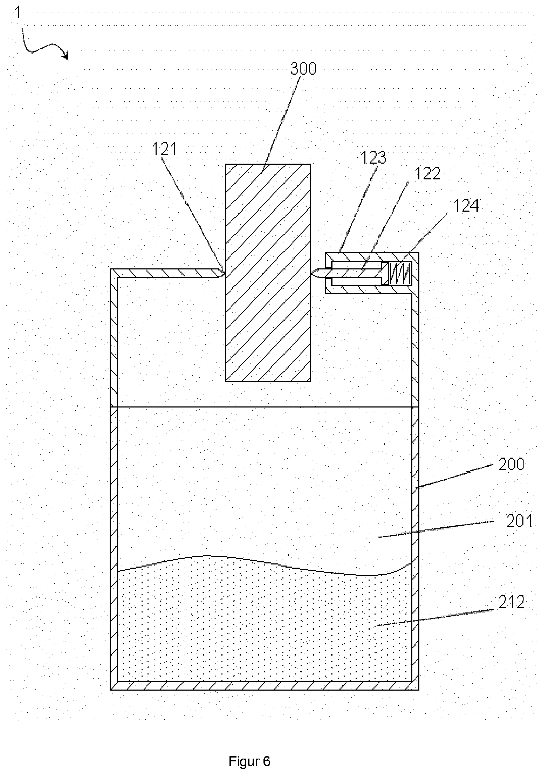

Figur 6 zeigt eine schematische Ansicht einer Alternative eines erfindungsgemäßen Luftentfeuchters 1 zur Sorption von Feuchtigkeit aus Raumluft mit eingelegter Tablette 300 beinhaltend ein hygroskopisches Luftentfeuchtungsmittel, also eines erfindungsgemäßen Systems.

Der Luftenfeuchter 1 umfasst eine Haltevorrichtung mit einem Hängemittel umfassend eine Lagerspitze 121 an der einen Seite der Tablette 300 und eine gegenüberliegende Versatzspitze 122, sowie einen unterhalb der Haltevorrichtung angeordneten Auffangbehälter 200 mit einem Hohlraum 201 zur Aufnahme einer hygroskopischen Lösung 212. Die Versatzspitze 122 ist dabei in einem Führungselement 123, insbesondere mittels eines nicht dargestellten Betätigungselementes verschiebbar in Richtung der Tablette 300 sowie der Lagerspitze 121 unter Vorspannung einer Feder 124 gelagert. Die Spannung der Feder 124 drückt die Versatzspitze dabei in Richtung Tablette 300. Hierdurch kann die Tablette 300 zwischen Lagerspitze 121 und Versatzspitze 122 aufgehängt werden, wobei lediglich ein Kontakt zwischen der Tablettenoberfläche und den beiden genannten Spitzen 121, 122 vorliegt, so dass einen Kontakt nahezu der gesamten Sorptionsoberfläche mit der Raumluft ermöglicht wird, um die freie und zur Sorption von Feuchtigkeit zur Verfügung stehende Sorptionsoberfläche der Tablette 300 zu vergrößern. Ferner kann die Tablette 300 im Bereich der Aufnahme der Spitzen 121, 122 eine nicht gezeigte Aussparung, beispielsweise in Form einer Sacklochöffnung oder -bohrung aufweisen, um dem Anwender einen bevorzugten Angriffspunkt bereitzustellen. Auch kann so die Fixierung verbessert werden. Im gezeigten Fall wird durch die spitze Gestaltung der Lagerspitze 121 und der Versatzspitze 122 sowie aufgrund der Vorspannung der Feder 124 beim Aufhängen der Tablette 300 eine geringfügige Aussparung auf beiden Seiten der Tablette 300 eingebracht. Im Zuge der Auflösung der Tablette 300 bei der Sorption der Feuchtigkeit verkleinert sich auch ihre Größe. Eine Fixierung ist jedoch dennoch durch die verschiebbare Versatzspitze 122 gewährleistet, die durch die Federkraft der Feder 124 in Richtung der Lagerspitze 121 gedrückt wird. Selbstverständlich kann eine hier eingesetzte Tablette 300 auch oberhalb beschriebene Nuten, trichterförmige Mulden oder andere Gestaltungen aufweisen, die es ermöglichen, die Sorptionsoberfläche zu vergrößern. Auch kann die Tablette 300 an den Kanten gefast oder abgerundet sein. Zudem kann der abgebildete Luftenfeuchter eine nicht dargestellte oberhalb beschriebene Abdeckung aufweisen sowie einen dargestellten Auslaufschutz.

**Bezugszeichenliste**

| | | | |
|---|---|---|---|
| 1 | Luftentfeuchter | 203 | Behälterwand |
| 100 | Abdeckung | 204 | Schnappelement |
| 101 | Innenraum | 205 | Sichtfenster |
| 102 | Abdeckbereich | 206 | Skala |
| 103 | Deckel | 207 | Kante |
| 104 | Öffnung | 209 | Verschlusselement |
| 105 | Öffnungskante | 210 | Wölbung |
| 106 | Deckelkante | 211 | Tablettenaufnahme |
| 107 | Scharnier | 212 | Salzlösung |
| 108 | Belüftungsschlitz | 300 | Tablette |
| 109 | Verstärkungsrippe | 301 | Tablettenkörper |
| 110 | Abstandselement | 302 | Sorptionsoberfläche |
| 111 | Dorn | 303 | Fase |
| 112 | Abstandsrippe | 304 | Aussparung |
| 113 | Belüftungsschlitz | 305 | Mulde |
| 114 | Aufnahme | 306 | Nut |
| 115 | Innenwand | 307 | Deckfläche |
| 116 | Öffnungshilfe | 308 | Bodenfläche |
| 117 | Belüftungstrichter | 309 | Mantelfläche |
| 118 | Verbindungsmittel | 400 | Auslaufschutz |
| 119 | Nocken | 401 | Befestigungsabschnitt |
| 120 | Montageabschnitt | 402 | Führungsrippe |
| 121 | Lagerspitze | 403 | Kragen |
| 122 | Versatzspitze | 404 | Trichter |
| 123 | Führungselement | 405 | Obere Ablauföffnung |
| 124 | Feder | 406 | Untere Ablauföffnung |
| 200 | Auffangbehälter | 407 | Ablaufkanal |
| 201 | Hohlraum | 408 | Ausgussöffnung |
| 202 | Behälterboden | 409 | Ausgusskanal |

## Patentansprüche

1. Vorrichtung (1) zur Sorption von Feuchtigkeit aus Raumluft mittels einer Tablette (300) beinhaltend ein hygroskopisches Luftentfeuchtungsmittel aufweisend einen Tablettenkörper (301) mit einer Sorptionsoberfläche (302), aufweisend eine Haltevorrichtung (111, 121, 122) für die Tablette (300), sowie einen unterhalb der Haltevorrichtung (111, 121, 122) angeordneten Auffangbehälter (200) zur Aufnahme einer Lösung (212), wobei die Haltevorrichtung (111, 121, 122) ein Hängemittel (111, 121, 122) zum Aufhängen der Tablette (300) oberhalb des Auffangbehälters (200) umfasst, wobei das Hängemittel (111, 121, 122) einen Kontakt nahezu der gesamten Sorptionsoberfläche (302) mit der Raumluft ermöglicht, um die freie und zur Sorption von Feuchtigkeit zur Verfügung stehende Sorptionsoberfläche (302) der Tablette (300) zu vergrößern, wobei die Haltevorrichtung (111, 121, 122) ein dornförmig gestaltetes Hängemittel (111, 121, 122) umfasst, welches ein Eingriffsmöglichkeit in eine Aussparung (304) der Tablette (300) zum Aufhängen der Tablette (300) bereitstellt; **dadurch gekennzeichnet, dass** das dornförmig gestaltete Hängemittel (111) Öffnungen (113) aufweist, um eine Belüftung der Tablette (300) im Bereich der Aussparung (304) zu ermöglich und die freie und zur Sorption von Feuchtigkeit zur Verfügung stehende Sorptionsoberfläche (302) der Tablette (300) zu vergrößern und/oder wobei das dornförmig gestaltetes Hängemittel (111, 121, 122) vorstehende Abstandselemente (112) zur Bereitstellung einer Auflagemöglichkeit für die Tablette (300) im Bereich ihrer Aussparung (304) aufweist, um die Kontaktfläche von Tablette (300) und Hängemittel zu minimieren.

2. Vorrichtung (1) nach Anspruch 1, **dadurch gekennzeichnet, dass** oberhalb des Auffangbehälters (200) eine Abdeckung (100) vorgesehen ist, welche einen Innenraum (101) umschließt in der das Hängemittel (111, 121, 122) vorgesehen ist, wobei die Abdeckung (100) mit zumindest einer Belüftungsöffnung (108, 113, 117) ausgestattet ist, um eine Belüftung der Tablette (300) mit Raumluft zur Sorption der Feuchtigkeit aus der Raumluft zu ermöglichen.

3. Vorrichtung (1) nach Anspruch 2, **dadurch gekennzeichnet, dass** zumindest jeweils eine Belüftungsöffnung (108, 113, 117) an einer ersten Seite (103) und an einer gegenüberliegenden zweiten Seite (102) der Abdeckung (100) vorgesehen ist, wobei zwischen den Belüftungsöffnungen (108, 113, 117) der gegenüberliegenden Seiten (102, 103) innerhalb der Abdeckung (100) das Hängemittel (111, 121, 122) für die Tablette (300) vorgesehen ist, um eine Durchzugsmöglichkeit der Raumluft durch den Innenraum (101) der Abdeckung (100) bereitzustellen.

4. Vorrichtung (1) nach Anspruch 3, **dadurch gekennzeichnet, dass** die zumindest eine Belüftungsöffnung (108, 117) der zweiten Seite (102) eine Projektion der zumindest einen Belüftungsöffnungen (108, 117) der gegenüberliegenden ersten Seite (103) ist.

5. Vorrichtung (1) nach einem der Ansprüche 2 bis 4, **dadurch gekennzeichnet, dass** eine Vielzahl an Belüftungsöffnungen (108, 113, 117) zum Einsatz kommt, wobei die Gesamtöffnungsfläche aller Belüftungsöffnungen (108, 113, 117) im Bereich von 40cm² bis 80cm² liegt.

6. Vorrichtung (1) nach einem der Ansprüche 2 bis 4, **dadurch gekennzeichnet, dass** die Abdeckung (100) zumindest eine Abdeckungsbereich (102) und einen Öffnungsbereich (103) umfasst, über die ein Eingriff in den Innenraum (100) zur Befüllung der Vorrichtung (1) mit einer Tablette (300) möglich ist.

7. Vorrichtung (1) nach Anspruch 6, **dadurch gekennzeichnet, dass** der Öffnungsbereich (103) als ein hinsichtlich des Abdeckungsbereichs (102) verschwenkbarer Deckel (103) gestaltet ist, welcher das Hängemittel (111) umfasst, derart, dass eine Öffnung des Deckels (103) auch zu einer Verschwenkung des Hängemittels (111) hinsichtlich des Abdeckungsbereichs (102) führt, um eine Befüllung der Vorrichtung (1) mit einer Tablette (300) zu erleichtern.

8. Vorrichtung (1) nach einem vorhergehenden Ansprüche, **dadurch gekennzeichnet, dass** die Haltevorrichtung einen an einer ersten Seite (103) der Vorrichtung (1) vorgesehenen Befestigungsabschnitt (117) für das Hängemittel (111) umfasst, von dem sich das Hängemittel (111) von der ersten Seite (103) der Vorrichtung (1) in Richtung der gegenüberliegenden zweiten Seite (102) erstreckt, wobei die Haltevorrichtung (1) an dieser zweiten Seite (102) eine Aufnahme (114) für das Hängemittel (111) umfasst, wobei das Hängemittel (111) von der Aufnahme (114) lösbar gestaltet ist, um eine einfache Befüllung der Vorrichtung (1) mit einer Tablette (300) aufweisend eine als Durchgangsöffnung oder Durchgangsloch oder durchgehenden Bohrung gestaltete Aussparung (304) zu ermöglichen und um eine sichere Fixierung des Hängemittels (111) und somit der Tablette (300) zu gewährleisten.

9. System bestehend aus Vorrichtung (1) zur Sorption von Feuchtigkeit aus Raumluft nach einem der Ansprüche 1 bis 7 und einer Tablette (300) beinhaltend ein hygroskopisches Luftentfeuchtungsmittel aufweisend einen Tablettenkörper (301) mit einer Sorptionsoberfläche (302), wobei der Tablettenkörper (301) eine Aussparung (304) zur Aufnahme eines dornförmig gestalteten Hängemittels (111, 121, 122) zum Aufhängen der Tablette (300) aufweist.

10. System nach Anspruch 9, wobei die Vorrichtung (1) oberhalb des Auffangbehälters (200) eine Abdeckung (100) aufweist, welche einen Innenraum (101) umschließt in der das Hängemittel (111, 121, 122) vorgesehen ist, wobei die Abdeckung (100) mit zumindest einer Belüftungsöffnung (108, 113, 117) ausgestattet ist, um eine Belüftung der Tablette (300) mit Raumluft zur Sorption der Feuchtigkeit aus der Raumluft zu ermöglichen.

11. System nach Anspruch 10, wobei eine Vielzahl von Belüftungsöffnung (108, 113, 117) vorgesehen sind und, wobei die Gesamtöffnungsfläche aller Belüftungsöffnungen (108, 113, 117) vorzugsweise im Bereich von 40cm² bis 80cm² liegt, besonders bevorzugt im Bereich von 45cm² bis 65cm².

12. System nach Anspruch 11, **dadurch gekennzeichnet, dass** die Belüftungsöffnungen (108, 113, 117) zumindest an zwei gegenüberliegenden Seiten der Abdeckung (100) angeordnet sind, wobei die Tablette (300) bevorzugt innerhalb der Abdeckung (100) zwischen den die Belüftungsöffnungen (108, 113, 117) aufweisenden Seiten angeordnet ist, um eine Durchzugsmöglichkeit zu ermöglichen.

13. System nach einem der Ansprüche 11 oder 12, wobei das Oberflächenverhältnis von der Tablettenoberfläche zur Öffnungsoberfläche aller Belüftungsöffnungen im Bereich von 7,25 - 4,25 liegt.

## Claims

1. A device (1) for the sorption of moisture from room air by means of a tablet (300) which contains a hygroscopic air dehumidification agent and has a tablet body (301) comprising a sorption surface (302), which device has a holding device (111, 121, 122) for the tablet (300) and a collection container (200) which is arranged below the holding device (111, 121, 122) and is intended for receiving a solution (212), the holding device (111, 121, 122) comprising a suspension means (111, 121, 122) for suspending the tablet (300) above the collection container (200), the suspension means (111, 121, 122) allowing contact of almost the entire sorption surface (302) with the room air, in order to increase the free sorption surface area (302) of the tablet (300) which is available for the sorption of moisture, the holding device (111, 121, 122) comprising a rod-shaped suspension means (111, 121, 122), which provides a way of engaging in a recess (304) in the tablet (300) in order to suspend the tablet (300); **characterized in that** the rod-shaped suspension means (111) has openings (113) in order to allow the tablet (300) to be ventilated in the region of the recess (304) and increase the free sorption surface area (302) of the tablet (300) which is available for the sorption of moisture, and/or the rod-shaped suspension means (111, 121, 122) having protruding spacing elements (112) for providing a way of supporting the tablet (300) in the region of the recess (304) thereof in order to minimize the contact surface area between the tablet (300) and the suspension means.

2. The device (1) according to claim 1, **characterized in that** a cover (100) is provided above the collection container (200), which cover surrounds an interior space (101) in which the suspension means (111, 121, 122) is provided, the cover (100) being equipped with at least one ventilation opening (108, 113, 117) in order to allow the tablet (300) to be ventilated with room air for the sorption of moisture from the room air.

3. The device (1) according to claim 2, **characterized in that** at least one ventilation opening (108, 113, 117) is provided on each of a first side (103) and an opposite second side (102) of the cover (100), the suspension means (111, 121, 122) for the tablet (300) being provided within the cover (100) between the ventilation openings (108, 113, 117) in the opposite sides (102, 103) in order to provide a way of drawing room air through the interior space (101) of the cover (100).

4. The device (1) according to claim 3, **characterized in that** the at least one ventilation opening (108, 117) in the second side (102) is a projection of the at least one ventilation opening (108, 117) in the opposite first side (103).

5. The device (1) according to one of claims 2 to 4, **characterized in that** a plurality of ventilation openings (108, 113, 117) are used, the total opening surface area of all ventilation openings (108, 113, 117) being in the range of from 40cm² to 80cm².

6. The device (1) according to one of claims 2 to 4, **characterized in that** the cover (100) comprises at least one covering region (102) and one opening region (103), via which the interior space (100) can be accessed in order to insert a tablet (300) into the device (1).

7. The device (1) according to claim 6, **characterized in that** the opening region (103) is designed as a lid (103) which can be pivoted with respect to the covering region (102) and comprises the suspension means (111) such that opening the lid (103) also leads to the suspension means (111) pivoting with respect to the covering region (102) in order to make it easier to insert a tablet (300) into the device (1).

8. The device (1) according to one of the preceding claims, **characterized in that** the holding device comprises a fastening portion (117) for the suspension means (111), which fastening portion is provided on a first side (103) of the device (1) and from which fastening portion the suspension means (111) extends from the first side (103) of the device (1) towards the opposite second side (102), the holding device (1) on said second side (102) comprising a receiving portion (114) for the suspension means (111), the suspension means (111) being detachable from the receiving portion (114) in order to allow a tablet (300) to be easily inserted into the device (1), which tablet has a recess (304) designed as a through-opening or through-hole or through-bore, and in order to ensure the suspension means (111) and therefore the tablet (300) are securely fixed.

9. A system consisting of the device (1) for the sorption of moisture from room air according to one of claims 1 to 7 and a tablet (300) which contains a hygroscopic air dehumidification agent and has a tablet body (301) comprising a sorption surface (302), wherein the tablet body (301) has a recess (304) for receiving a rod-shaped suspension means (111, 121, 122) for hanging the tablet (300).

10. The system according to claim 9, wherein the device (1) has a cover (100) above the collection container (200), which cover surrounds an interior space (101) in which the suspension means (111, 121, 122) is provided, wherein the cover (100) is equipped with at least one ventilation opening (108, 113, 117) in order to allow the tablet (300) to be ventilated with room air for the sorption of moisture from the room air.

11. The system according to claim 10, wherein a plurality of ventilation openings (108, 113, 117) are provided, and wherein the total opening surface area of all ventilation openings (108, 113, 117) is preferably in the range of from 40cm² to 80cm2, particularly preferably in the range of from 45cm² to 65cm².

12. The system according to claim 11, **characterized in that** the ventilation openings (108, 113, 117) are arranged at least on two opposite sides of the cover (100), the tablet (300) being preferably arranged within the cover (100) between the sides having the ventilation openings (108, 113, 117) in order to allow air to pass through.

13. The system according to one of claims 11 or 12, wherein the surface area ratio of the tablet surface area to the opening surface area of all ventilation openings is in the range of from 7.25 to 4.25.

## Revendications

1. Dispositif (1) pour la sorption de l'humidité de l'air ambiant au moyen d'une pastille (300) contenant un agent hygroscopique de déshumidification de l'air présentant un corps de pastille (301) doté d'une surface de sorption (302), présentant un dispositif de maintien (111, 121, 122) pour la pastille (300) et un récipient de collecte (200) disposé sous le dispositif de maintien (111, 121, 122) et destin recevoir une solution (212), dans lequel le dispositif de maintien (111, 121, 122) comprend un moyen de suspension (111, 121, 122) pour suspendre la pastille (300) au-dessus du récipient de collecte (200), ledit moyen de suspension (111, 121, 122) permettant un contact entre la quasi-totalité de la surface de sorption (302) et l'air ambiant, pour augmenter la surface de sorption (302) libre de la pastille (300), prévue pour la sorption de l'humidité, le dispositif de maintien (111, 121, 122) comprenant un moyen de suspension (111, 121, 122) en forme de mandrin pouvant être inséré dans un évidement (304) de la pastille (300) pour suspendre la pastille (300); **caractérisé, en ce que** le moyen de suspension en forme de mandrin (111) présente des ouvertures (113) pour permettre l'exposition de la pastille (300) à l'air dans la zone de l'évidement (304) et pour augmenter la surface de sorption (302) libre de la pastille (300), prévue pour la sorption de l'humidité, et/ou dans lequel le moyen de suspension en forme de mandrin (111, 121, 122) présente des éléments d'espacement (112) en saillie pour offrir une possibilité de support pour la pastille (300) dans la zone de son évidement (304), pour réduire la surface de contact entre la pastille (300) et le moyen de suspension.

2. Dispositif (1) selon la revendication 1, **caractérisé en ce qu'**un couvercle (100) est prévu sur le récipient de collecte (200), lequel couvercle enfermant un espace intérieur (101) dans lequel est prévu le moyen de suspension (111, 121, 122), le couvercle (100) étant équipé d'au moins une ouverture d'aération (108, 113, 117) pour permettre l'exposition de la pastille (300) à l'air ambiant pour la sorption de l'humidité de l'air ambiant.

3. Dispositif (1) selon la revendication 2, **caractérisé en ce qu'**au moins une ouverture d'aération (108, 113, 117) est prévue sur un premier côté (103) et sur un second côté opposé (102) du couvercle (100), dans lequel entre les ouvertures d'aération (108, 113, 117) des côtés opposés (102, 103), l'intérieur du couvercle (100), le moyen de suspension (111, 121, 122) pour la pastille (300) est prévu, pour offrir une possibilité de passage de l'air ambiant à travers l'espace intérieur (101) du couvercle (100).

4. Dispositif (1) selon la revendication 3, **caractérisé en ce que** l'au moins une ouverture d'aération (108, 117) du second côté (102) est une saillie de l'au moins une ouverture d'aération (108, 117) du premier côté opposé (103).

5. Dispositif (1) selon l'une quelconque des revendications 2 à 4, **caractérisé en ce que** plusieurs ouvertures d'aération (108, 113, 117) sont utilisées, la surface totale d'ouverture de toutes les ouvertures d'aération (108, 113, 117) se situant dans la plage allant de 40 cm² à 80 cm².

6. Dispositif (1) selon l'une quelconque des revendications 2 à 4, **caractérisé en ce que** le couvercle (100) comprend au moins une zone de couvercle (102) et une zone d'ouverture (103), par laquelle il est possible d'accéder à l'espace intérieur (100) pour remplir le dispositif (1) avec une pastille (300).

7. Dispositif (1) selon la revendication 6, **caractérisé en ce que** la zone d'ouverture (103) est agencée comme un capot pivotant par rapport à la zone de couvercle (102), lequel capot comprend le moyen de suspension (111), de telle sorte qu'une ouverture du capot (103) entraîne également un pivotement du moyen de suspension (111) par rapport à la zone de suspension (102), pour faciliter le remplissage du dispositif (1) avec une pastille (300).

8. Dispositif (1) selon l'une quelconque des revendications précédentes, **caractérisé en ce que** le dispositif de maintien comprend pour le moyen de suspension (111) une section de fixation (117) prévue sur un premier côté (103) du dispositif (1), à partir de laquelle le moyen de suspension (111) s'étend depuis le premier côté (103) du dispositif (1) en direction du second côté opposé (102), le dispositif de maintien (1) sur ledit second côté (102) comprenant un logement (114) pour le moyen de suspension (111), le moyen de suspension (111) étant conçu de manière amovible par rapport au logement (114), pour permettre un remplissage facile du dispositif (1) avec une pastille (300) présentant un évidement (304) sous forme d'ouverture de passage, d'orifice de passage ou de perforation traversante, et pour garantir une fixation sure du moyen de suspension (111), donc de la pastille (300).

9. Système constitué d'un dispositif (1) pour la sorption de l'humidité de l'air ambiant selon l'une quelconque des revendications 1 à 7, et d'une pastille (300) contenant un agent hygroscopique de déshumidification de l'air présentant un corps de pastille (301) doté d'une surface de sorption (302), dans lequel le corps de pastille (301) a un évidement (304) pour recevoir un moyen de suspension en forme de mandrin (111, 121, 122) pour suspendre la pastille (300).

10. Système selon la revendication 9, dans lequel le dispositif (1) présente un couvercle (100) sur le récipient de collecte (200), lequel couvercle enferme un espace intérieur (101) dans lequel est prévu le moyen de suspension (111, 121, 122), le couvercle (100) étant équipé d'au moins une ouverture d'aération (108, 113, 117) pour permettre l'exposition de la pastille (300) à l'air ambiant pour la sorption de l'humidité de l'air ambiant.

11. Système selon la revendication 10, dans lequel plusieurs ouvertures d'aération (108, 113, 117) sont prévues et dans lequel la surface totale d'ouverture de toutes les ouvertures d'aération (108, 113, 117) se situe de préférence dans la plage allant de 40 cm2 à 80 cm², de façon particulièrement préférée dans la plage allant de 45 cm² à 65 cm².

12. Système selon la revendication 11, **caractérisé en ce que** les ouvertures d'aération (108, 113, 117) sont disposées au moins sur deux côtés opposés du couvercle (100), la pastille (300) étant de préférence disposée à l'intérieur du couvercle (100) entre les côtés présentant des ouvertures d'aération (108, 113, 117), pour offrir une possibilité de passage.

13. Système selon l'une quelconque des revendications 11 ou 12, dans lequel le rapport de surface entre la surface de la pastille et la surface d'ouverture de toutes les ouvertures se situe dans la plage allant de 7,25 à 4,25.
